# EUROPÄISCHE PATENTSCHRIFT

(11) **EP 2 110 208 B1**
(45) Veröffentlichungstag und Bekanntmachung des Hinweises auf die Patenterteilung: **30.03.2011**
(21) Anmeldenummer: 09005360.4
(22) Anmeldetag: 15.04.2009
(51) Int. Cl.: B25G 1/04, F16B 7/14

(54) **Teleskopstiel mit Arretiereinrichtung**
Telescopic handle with locking device
Tige de télescope dotée d'un dispositif d'arrêt

(30) Priorität: 18.04.2008 DE 102008019559
(43) Veröffentlichungstag der Anmeldung: 21.10.2009
(73) Patentinhaber: VERMOP Salmon GmbH, 82205 Gilching (DE)
(72) Erfinder: Salmon, Dirk, 82205 Gilching (DE)
(74) Vertreter: HOFFMANN EITLE

(56) Entgegenhaltungen:
- DE-U1- 20 117 415
- US-A- 2 542 967
- US-A- 4 294 560
- US-A1- 2008 072 391

## Beschreibung

### Gebiet der Erfindung

Die Erfindung betrifft einen Teleskopstiel zur Befestigung von Arbeitsgeräten, wie beispielsweise Reinigungseinrichtungen. Der Teleskopstiel besitzt ein erstes und ein zweites Stielelement, die in Längsrichtung gegeneinander verschiebbar sind und mittels einer Arretiereinrichtung lösbar miteinander fixiert werden können.

### Stand der Technik

In der Technik sind mehrteilige Stiele bekannt, die sich teleskopartig ausfahren und einziehen lassen. Dies ermöglicht sowohl eine Anpassung der Stiellänge an äußere Faktoren, wie beispielsweise die Körpergröße des Benutzers oder die Erfordernisse der zu erledigenden Tätigkeit, als auch eine platzsparende Unterbringung des Arbeitsgeräts mitsamt Stiel. Im Allgemeinen bestehen solche Teleskopstiele aus zwei oder mehr Rohren unterschiedlichen Durchmessers, die ineinander geschoben sind und miteinander in verschiedenen Positionen fixiert werden können. Hierbei unterscheidet man zwischen Stielkonstruktionen, bei denen eine solche Fixierung nur in bestimmten Stellungen der Rohre relativ zueinander möglich ist und solchen, die eine Fixierung in jeder Rohrkonfiguration erlauben.

In die erste Kategorie fallen zweiteilige Teleskopstiele, bei denen das innere Rohr mit einem federbelasteten Zapfen versehen ist. Der Zapfen kann, unter Druckeinwirkung, durch ein Loch radial in das innere Rohr geschoben werden, was ein freies Verschieben der beiden Rohre relativ zueinander erlaubt. Das äußere Rohr weist eine Mehrzahl von in Längsrichtung des Stiels angeordneten Löchern auf, deren Durchmesser mindestens und annähernd dem des Zapfens entspricht. Wird durch Verdrehen und Verschieben der Rohre relativ zueinander der Zapfen mit einem dieser Löcher in eine übereinstimmende Position gebracht, so bewirkt der Federmechanismus des Zapfens, dass dieser in dem Loch einrastet und somit der Stiel in seiner Position fixiert wird. Damit wird eine Arretierung der beiden Rohre sowohl entlang der Längsachse des Stiels als auch senkrecht zu ihr erreicht, was ein Verschieben oder Verdrehen der Rohre relativ zueinander verhindert. Dadurch erlangt die Konstruktion ein hohes Maß an Stabilität. Ein solcher Teleskopstiel ist beispielsweise in der US-A-2008/0072391 offenbart. Nachteilig ist jedoch, dass eine Längenverstellung des Stiels, die durch Einrasten des Zapfens in unterschiedlichen Löchern erreicht wird, nicht stufenlos erfolgen kann, womit nur eine begrenzte Anzahl von verschiedenen Stiellängen zur Verfügung steht. Des Weiteren ist der Federmechanismus des Zapfens normalerweise sehr steif ausgelegt, um ein unbeabsichtigtes Lösen der Fixierung zu verhindern. Dies führt dazu, dass das Verstellen der Stiellänge mit einem nicht unerheblichen Kraftaufwand verbunden ist.

In die zweite der oben genannten Kategorien fallen Teleskopstiele, bei denen die Arretierung durch Verdrehen des einen Rohrs um die Längsachse des Stiels relativ zum anderen erfolgt, was eine stufenlose Einstellung der Stiellänge ermöglicht. Die Fixierung des Stiels wird hierbei durch eine Feststelleinrichtung erreicht, die zwischen den beiden Rohren angeordnet und in der Regel als Exzentermechanismus ausgebildet ist. Ein solcher Teleskopstiel ist beispielsweise in der US 4,294,560 offenbart. Da auch das Lösen der Stielverbindung durch gegenseitiges Verdrehen der Rohre relativ zueinander erfolgt, hat eine solche Konstruktion allerdings den Nachteil, dass sie nicht sehr stabil gegenüber Kräften ist, die tangential auf den Stiel wirken. Bei Arbeitsvorgängen beispielsweise, die eine Drehbewegung des Arbeitsgeräts und somit auch des Stiels erfordern, kann sich die Feststelleinrichtung lockern oder ganz lösen. Dies schränkt den Einsatzbereich eines solchen Teleskopstiels beträchtlich ein.

DE -20117415U und US- 2542967-A offenbaren Teleskopstiele gemäß dem Oberbegriff des Anspruchs 1.

### Darstellung der Erfindung

Der vorliegenden Erfindung liegt die Aufgabe zugrunde, einen Teleskopstiel zu entwickeln, der problemlos längenverstellbar ist und eine stabile Fixierung der Stielelemente miteinander ermöglicht und eine Trennung der Komponenten der Arretiereinrichtung verhindert. Die Verstellung der Stiellänge und Arretierung des Stiels soll unkompliziert und ohne größeren Kraftaufwand durchführbar sein. Des Weiteren soll die Arretiereinrichtung einfach und kostengünstig herstellbar sein.

Diese Aufgabe wird durch einen Teleskopstiel mit den Merkmalen des Anspruchs 1 gelöst. Vorteilhafte Ausführungsformen folgen aus den übrigen Ansprüchen.

Die Aufgabe wird durch die vorliegende Erfindung dadurch gelöst, dass die Arretiereinrichtung eine erste und eine zweite Komponente umfasst, die entlang der Längsrichtung der Stielelemente drehbar zueinander verbunden sind, wobei die erste Komponente um die Längsachse der Stielelemente relativ zur zweiten Komponente verdrehbar ist. Der Übergang von einer geschlossenen Stellung (in der die beiden Stielelemente miteinander fixiert sind) in eine offene Stellung (in der die beiden Stielelemente gegeneinander verschiebbar sind) der Arretiereinrichtung und von einer offenen in eine geschlossene Stellung der Arretiereinrichtung erfolgt durch Verdrehen der ersten Komponente um die Längsachse der Stielelemente relativ zur zweiten Komponente. In der geschlossenen Stellung übt die Arretiereinrichtung Druck auf das erste Stielelement aus, wobei der Druck von mindestens einer elastischen Hülse ausgeübt wird. Dieser Aufbau erlaubt ein einfaches Schließen und Öffnen der Arretiereinrichtung.

In der offenen Stellung der Arretiereinrichtung können die Stielelemente ohne nennenswertem Kraftaufwand in Längsrichtung gegeneinander verschoben werden, was ein problemloses Verstellen der Stiellänge ermöglicht. Sowohl die Fixierung der beiden Stielelemente miteinander, als auch das Lösen der Stielelementfixierung erfolgt durch Verdrehen der zwei Komponenten der Arretiereinrichtung relativ zueinander, was je nach Ausführungsform z. B. indirekt über ein Verdrehen der beiden Stielelemente relativ zueinander oder direkt durch ein Verdrehen der Arretiereinrichtungskomponenten durch den Benutzer durchgeführt werden kann. In letzterem Fall, kann die Arretiereinrichtung so ausgebildet sein, dass sie nicht durch Verdrehen der beiden Stielelemente um ihre Längsachse relativ zueinander gelöst wird. Somit bietet der Teleskopstiel dieser Ausführungsform ein hohes Maß an Stabilität und ist auch bei komplexeren Arbeitsvorgängen einsetzbar, die beispielsweise eine Drehbewegung oder eine kombinierte Dreh- und Schubbewegung des am Stiel befestigten Arbeitsgeräts erfordern.

Vorzugsweise wirkt der Druck der mindestens einen elastischen Hülse, den die Arretiereinrichtung in ihrer geschlossenen Stellung ausübt, radial auf das erste Stielelement. Somit wird gewährleistet, dass kein Druck in Längsrichtung des Stiels von der Arretiereinrichtung auf das erste Stielelement wirkt, da dies ein Verschieben der zwei Stielelemente entlang ihrer Längsachse relativ zueinander bewirken oder zumindest erleichtern könnte.

Vorzugsweise ist die zweite Komponente der Arretiereinrichtung fest mit dem zweiten Stielelement verbunden. Da in der geschlossenen Stellung der Arretiereinrichtung das erste Stielelement relativ zur Arretiereinrichtung fixiert ist, wird so eine stabile Fixierung der zwei Stielelement miteinander gewährleistet.

Des Weiteren bestehen die erste Komponente und die zweite Komponente bevorzugt aus einem einheitlichen Material, vorzugsweise Kunststoff. Dies erleichtert die Fertigung. Außerdem kann die Arretiereinrichtung leicht und dennoch robust gestaltet werden, was die Handhabung des Teleskopstiels mitsamt daran befestigtem Arbeitsgerät verbessert.

Die beiden Stielelemente bestehen bevorzugt aus Kunststoff oder Metall, wobei das Material je nach vorgesehenem Einsatzbereich des Teleskopstiels gewählt werden kann. Falls eine hohe Stabilität erwünscht ist, zum Beispiel bei Verwendung in Verbindung mit einem Gerät mit lange ausziehbaren Stielelementen oder ähnlichem, kann der Stiel aus hartem Metall gefertigt werden. Bei Einsatz des Stiels für einfachere Tätigkeiten, wie beispielsweise gewöhnliche Reinigungsvorgänge im Haushalt, kann Kunststoff verwendet werden, um das Gewicht des Stiels zu senken und so den Benutzungskomfort zu erhöhen.

Vorzugsweise besteht die mindestens eine elastische Hülse aus Gummi. Auf diese Weise kann die auf der Auflagefläche zwischen Hülse und erstem Stielelement auftretende Haftreibung sehr hoch gewählt werden, um eine stabile Fixierung des ersten Stielelements zu garantieren.

Die beiden Stielelemente besitzen eine eingefahrene und eine ausgezogene Position, wobei die beiden Stielelemente sowohl in diesen beiden Positionen, als auch in allen Zwischenpositionen, die zwischen diesen beiden Positionen liegen, mittels der Arretiereinrichtung miteinander fixierbar sind. Dadurch lässt sich die Stiellänge stufenlos verändern und exakt den jeweiligen Anforderungen der zu erledigenden Tätigkeit anpassen.

Des Weiteren kann die Arretiereinrichtung so ausgebildet sein, dass ein Verdrehen der ersten und der zweiten Komponente um die Längsachse der Stielelemente relativ zueinander eine Änderung des Abstands in Längsrichtung der Stielelemente zwischen der ersten Komponente und dem von der ersten Komponente abgewandten Ende der zweiten Komponente bewirkt.

Dabei bewirkt diese Abstandsänderung in Längsrichtung der Stielelemente zwischen der ersten Komponente und dem von der ersten Komponente abgewandten Ende der zweiten Komponente eine Stauchung beziehungsweise Entspannung der an der zweiten Komponente angeordneten mindestens einen elastischen Hülse.

Gemäß der Erfindung ist die erste Komponente eine Spreizmutter mit Kegelgewinde und die zweite Komponente ein Befestigungsteil mit Kegelgewinde. Diese technisch einfach Lösung macht es möglich, die erste Komponente und zweite Komponente der Arretiervorrichtung bei relativer Drehung der Stielelemente zueinander um die Längsachse so zu bewegen, dass sich die erste Komponente und die zweite Komponente aufeinander zu bewegen oder voneinander weg bewegen. Das Vorsehen einer Spreizmutter hat zudem den Vorteil, dass diese einen zusätzlichen reibschlüssigen Kontakt zum ersten Stielelement herstellen kann, um auf diese Weise die beiden Stielelemente in der gewünschten Position noch besser zu fixieren, indem die Spreizmutter in einer geschlossenen Stellung der Arretiereinrichtung radialen Druck gegen den inneren Umfang des ersten Stielelements ausübt.

Vorzugsweise besteht die mindestens eine elastische Hülse aus einem thermoplastischen Elastomer und ist zwischen Gleitringen geführt. Auf diese Weise lässt sich durch eine Variation des axialen Abstands zwischen den Gleitringen die elastische Hülse komprimieren und entspannen.

Nach einer bevorzugten Ausführungsform der Erfindung umfasst der Teleskopstiel weiterhin ein Führungselement am zweiten Stielelement, das die relative Verschiebung der beiden Stielelemente in Längsrichtung begrenzt. Das Führungselement dient somit dazu, dass das erste Stielelement nicht aus dem zweiten Stielelement gezogen werden kann.

### Kurze Beschreibung der Zeichnungen

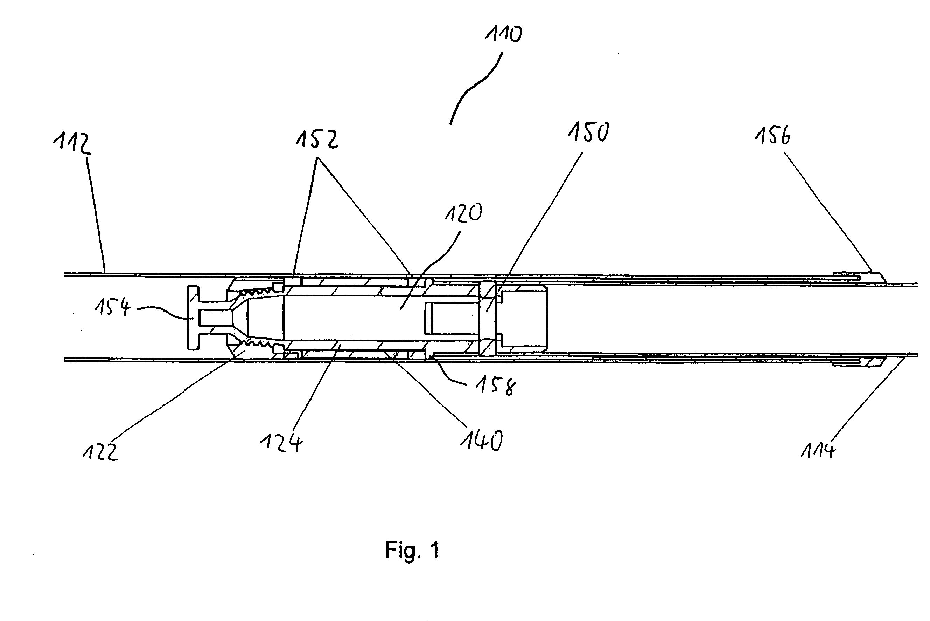

Nachfolgend wird die Erfindung rein beispielhaft anhand der beigefügten Figur beschrieben, wobei
- Fig. 1: einen Querschnitt eines Teils eines Teleskopstiels mitsamt Arretiereinrichtung nach einer Ausführungsform der Erfindung entlang der Längsrichtung des Teleskopstiels zeigt.

### Wege zur Ausführung der Erfindung

Figur 1 zeigt einen erfindungsgemäßen Teleskopstiel 110 nach einer beispielhaften Ausführungsform. Der Stiel umfasst ein erstes Stielelement 112 und ein zweites Stielelement 114, die vorzugsweise aus Aluminium, Stahl oder faserverstärktem Kunststoff bestehen, sowie eine Arretiereinrichtung 120, die vorzugsweise aus Polypropylen, eventuell mit Glas- oder Kohlefaserverstärkung, oder einer Mischung aus Polypropylen und einem thermoplastischen Elastomer (TPE) besteht, wobei das erste Stielelement 112 einen größeren Durchmesser als das zweite Stielelement 114 aufweist. Von den beiden Stielelementen 112, 114 sind hier nur die nahe der Arretiereinrichtung 120 liegenden Abschnitte dargestellt. Die Arretiereinrichtung 120 umfasst eine erste Komponente 122 und eine zweite Komponente 124, die entlang der Längsrichtung der Stielelemente 112, 114 angeordnet und drehbar zueinander verbunden sind. Insbesondere ist in der dargestellten Ausführungsform die erste Komponente 122 als eine Spreizmutter mit Kegelgewinde und die zweite Komponente 124 als ein Befestigungsteil mit Kegelgewinde ausgebildet, wobei die Kegelgewinde der ersten 122 und der zweiten Komponente 124 miteinander in Schraubeneingriff sind. Die erste Komponente 122 liegt mit der radialen Außenfläche an der Innenfläche (innere Mantelfläche) des ersten Stielelements 112 an.

Ein in dieser Ausführungsform als elastische Gummihülse ausgebildetes Federelement 140 ist an der zweiten Komponente 124 zwischen zwei Gleitringen 152 angeordnet. Die elastische Gummihülse 140 besteht vorzugsweise aus einem thermoplastischen Elastomer (TPE). Das zweite Stielelement 114 ist über einen Befestigungsbolzen 150 fest mit der zweiten Komponente 124 der Arretiereinrichtung 120 verbunden.

Das erste Stielelement 112 ist in der offenen Stellung der Arretiereinrichtung 120 frei entlang der Längsachse des Stiels 110 relativ zu der Arretiereinrichtung 120 und dem zweiten Stielelement 114 verschiebbar, so dass die Länge des Teleskopstiels 110 bequem verändert werden kann.

Um die Arretiereinrichtung 120 in die geschlossene Stellung zu bringen, wird das zweite Stielelement 114 relativ zu dem ersten Stielelement 112 um die Längsachse der Stielelemente 112, 114 in einer ersten Richtung verdreht, wodurch die erste Komponente 122 durch den Schraubeneingriff mit der zweiten Komponente 124 entlang der Längsachse des Teleskopstiels 110 in Richtung auf das von der ersten Komponente 122 abgewandte Ende der zweiten Komponente 124 bewegt wird. Dadurch drückt die erste Komponente 122 über einen der Gleitringe 152 (der linke in Fig. 1) auf die Gummihülse 140, die somit gestaucht wird und mit ihrer sich radial nach außen wölbenden Mantelfläche gegen die innere Oberfläche des ersten Stielelements 112 gedrückt wird. Durch die somit zwischen der Gummihülse 140 und dem ersten Stielelement 112 entstehende Haftreibung wird eine feste Verbindung zwischen dem ersten 112 und dem zweiten Stielelement 114 erreicht, die somit relativ zueinander fixiert sind. Die Arretiereinrichtung 120 befindet sich folglich in ihrer geschlossenen Stellung. Die erste Komponente kann zudem als Spreizmutter so ausgestaltet werden, dass diese zusätzlich radial gegen das erste Stielelement gespreizt werden kann und eine zusätzliche Haftreibung erzeugt.

Um die Verbindung zwischen den beiden Stielelementen 112, 114 wieder zu lösen, wird das zweite Stielelement 114 relativ zu dem ersten Stielelement 112 um die Längsachse der Stielelemente 112, 114 in entgegen gesetzter zweiter Richtung verdreht, wodurch die erste Komponente 122 durch den Schraubeneingriff mit der zweiten Komponente 124 entlang der Längsachse des Teleskopstiels 110 von dem der ersten Komponente 122 abgewandten Ende der zweiten Komponente 124 weg bewegt wird. Dadurch werden die erste Komponente 122 und die Gummihülse 140 entspannt und kehren elastisch in ihre ursprünglichen Positionen zurück, so dass die beiden Stielelemente 112, 114 frei relativ zueinander entlang ihrer Längsachse verschiebbar sind. Die Arretiereinrichtung 120 befindet sich folglich in ihrer offenen Stellung.

Um zu verhindern, dass bei dem Öffnungsvorgang der Arretiereinrichtung 120 die erste Komponente 122 ganz von der zweiten Komponente 124 getrennt wird, ist in der dargestellten Ausführungsform ein Anschlagselement 154 an dem mit dem Kegelgewinde versehenen Ende der zweiten Komponente 124 vorgesehen. Außerdem ist an dem ersten Stielelement 112 ein Führungsteil 156 angebracht, an dem, wenn der Teleskopstiel 110 auf seine maximale Länge ausgefahren ist, ein ringförmiger Vorsprung 158 der zweiten Komponente 124 anliegt. Dadurch wird verhindert, dass das zweite Stielelement 114 vollständig aus dem ersten Stielelement 112 herausgezogen wird.

Da die Gummihülse 140 sich um den Umfang der zweiten Komponente 124 erstreckt und im geschlossenen Zustand der Arretiereinrichtung 120 praktisch mit ihrer gesamten Mantelfläche an der inneren Oberfläche des ersten Stielelements 112 anliegt, ist die Verbindung zwischen den beiden Stielelementen 112, 114 sowohl gleichmäßig (da der zwischen Gummihülse 140 und erstem Stielelement 112 herrschende Druck über die Umfangsfläche der Gummihülse 140 einheitlich ist) als auch sehr stabil (da die Anlagefläche zwischen Gummihülse 140 und erstem Stielelement 112 groß ist und somit eine hohe Haftreibung wirkt). Des Weiteren kann der Verstellwinkel (also der Winkel, um den die beiden Stielelemente 112, 114 um ihre Längsachse relativ zueinander verdreht werden müssen, um von der offenen Stellung der Arretiereinrichtung 120 in die geschlossene, bzw. von der geschlossenen in die offene, zu gelangen) des Teleskopstiels 110 durch eine geeignete Wahl der Gummihülse 140 und der Kegelgewinde der ersten 122 und zweiten Komponente 124 variiert werden. Zum Beispiel kann der Verstellwinkel groß gewählt werden (z.B. zwei Umdrehungen der Stielelemente 112, 114 relativ zueinander, also 720°, oder mehr), so dass ein unbeabsichtigtes Lösen der Arretiereinrichtung 120 während der Benutzung des Teleskopstiels 110 erschwert oder sogar ganz verhindert wird.

## Patentansprüche

1. Teleskopstiel (110), umfassend:
- ein erstes Stielelement (112),
- ein zweites Stielelement (114),
- wobei die beiden Stielelemente in Längsrichtung stufenlos gegeneinander verschiebbar sind und
- mittels einer Arretiereinrichtung (120) lösbar miteinander fixierbar sind,
- wobei die Arretiereinrichtung eine offene Stellung hat, in der die beiden Stielelemente gegeneinander verschiebbar sind, und
- eine geschlossene Stellung hat, in der die beiden Stielelemente miteinander fixiert sind, und
- die Arretiereinrichtung in der geschlossenen Stellung Druck auf das erste Stielelement ausübt;
wobei
- der Druck von mindestens einer elastischen Hülse ausgeübt wird;
- die Arretiereinrichtung eine erste (122) und eine zweite Komponente (124) umfasst, die entlang der Längsrichtung der Stielelemente drehbar zueinander verbunden sind;
- die erste Komponente um die Längsachse der Stielelemente relativ zur zweiten Komponente verdrehbar ist;
- der Übergang von der geschlossenen in die offene Stellung der Arretiereinrichtung und von der offenen in die geschlossene Stellung der Arretiereinrichtung durch Verdrehen der ersten Komponente um die Längsachse der Stielelemente relativ zur zweiten Komponente erfolgt; und
- die Abstandsänderung in Längsrichtung der Stielelemente zwischen der ersten Komponente und dem von der ersten Komponente abgewandten Ende der zweiten Komponente eine Stauchung beziehungsweise Entspannung der mindestens einen elastischen Hülse bewirkt;
**dadurch gekennzeichnet, dass**
die erste Komponente (122) eine Spreizmutter mit Kegelgewinde ist und die zweite Komponente (124) ein Befestigungsteil mit Kegelgewinde ist, wobei an dem mit dem Kegelgewinde versehenen Ende der zweiten Komponente (124) ein Anschlagselement (154) zur Verhinderung einer vollständigen Trennung der ersten Komponente (122) von der zweiten Komponente (124) beim Übergang der Arretiereinrichtung (120) in die offene Stellung vorgesehen ist.

2. Teleskopstiel nach Anspruch 1,
**dadurch gekennzeichnet, dass**
der Druck der mindestens einen Hülse radial auf das erste Stielelement wirkt.

3. Teleskopstiel nach einem der vorhergehenden Ansprüche, **dadurch gekennzeichnet, dass**
die mindestens eine elastische Hülse an der zweiten Komponente angebracht ist.

4. Teleskopstiel nach einem der vorhergehenden Ansprüche, **dadurch gekennzeichnet, dass**
die zweite Komponente fest mit dem zweiten Stielelement verbunden ist.

5. Teleskopstiel nach einem der vorhergehenden Ansprüche, **dadurch gekennzeichnet, dass**
die erste Komponente (122) und die zweite Komponente (124) aus einem einheitlichen Material, vorzugsweise Kunststoff, bestehen.

6. Teleskopstiel nach einem der vorhergehenden Ansprüche, **dadurch gekennzeichnet, dass**
die beiden Stielelemente aus Kunststoff oder Metall bestehen.

7. Teleskopstiel nach einem der vorhergehenden Ansprüche, **dadurch gekennzeichnet, dass**
die Arretiereinrichtung so ausgebildet ist, dass ein Verdrehen der ersten und der zweiten Komponente um die Längsachse der Stielelemente relativ zueinander eine Änderung des Abstands in Längsrichtung der Stielelemente zwischen der ersten Komponente und dem von der ersten Komponente abgewandten Ende der zweiten Komponente bewirkt.

8. Teleskopstiel nach einem der vorhergehenden Ansprüche, **dadurch gekennzeichnet, dass**
die Spreizmutter (122) und das Kegelgewinde der zweiten Komponente (124) so dimensioniert und gestaltet sind, dass die Spreizmutter in der geschlossenen Stellung der Arretiereinrichtung radialen Druck gegen den Innenumfang des ersten Stielelements (112) ausübt.

9. Teleskopiestiel nach einem der vorhergehenden Ansprüche, **dadurch gekennzeichnet, dass**
die mindestens eine elastische Hülse (140) aus einem thermoplastischen Elastomer besteht und zwischen Gleitringen (152) geführt ist.

10. Teleskopstiel nach einem der vorhergehenden Ansprüche, weiter umfassend ein Führungselement (156) am ersten Stielelement (112), das die relative Verschiebung der beiden Stielelemente (112, 114) in Längsrichtung begrenzt.

## Claims

1. Telescopic handle (110), comprising:
- a first handle element (112),
- a second handle element (114),
- wherein the two handle elements are steplessly displaceable in the longitudinal direction relative to each other and
- can be fixed releasably to each other by means of a locking device (120),
- wherein the locking device has an open position in which the two handle elements are displaceable relative to each other, and
- has a closed position in which the two handle elements are fixed to each other, and
- the locking device in the closed position exerts pressure on the first handle element;
wherein
- the pressure is exerted by at least one elastic sleeve;
- the locking device comprises a first (122) and a second component (124) which are connected so as to be rotatable relative to each other along the longitudinal direction of the handle elements;
- the first component is rotatable relative to the second component about the longitudinal axis of the handle elements;
- the transition from the closed to the open position of the locking device and from the open to the closed position of the locking device is effected by rotation of the first component about the longitudinal axis of the handle elements relative to the second component; and
- the change of distance in the longitudinal direction of the handle elements between the first component and the end of the second component facing away from the first component causes compression or relaxation of the at least one elastic sleeve;
**characterised in that**
the first component (122) is an expanding nut with tapered thread and the second component (124) is a fastening part with tapered thread, wherein at the end of the second component (124) which has the tapered thread is provided a stop element (154) for the prevention of complete separation of the first component (122) from the second component (124) when the locking device (120) changes over to the open position.

2. Telescopic handle according to claim 1, **characterised in that** the pressure of the at least one sleeve acts radially on the first handle element.

3. Telescopic handle according to any of the preceding claims, **characterised in that** the at least one elastic sleeve is mounted on the second component.

4. Telescopic handle according to any of the preceding claims, **characterised in that** the second component is rigidly connected to the second handle element.

5. Telescopic handle according to any of the preceding claims, **characterised in that** the first component (122) and the second component (124) are made of a uniform material, preferably plastic.

6. Telescopic handle according to any of the preceding claims, **characterised in that** the two handle elements are made of plastic or metal.

7. Telescopic handle according to any of the preceding claims, **characterised in that** the locking device is designed in such a way that rotation of the first and second components about the longitudinal axis of the handle elements relative to each other causes a change in the distance in the longitudinal direction of the handle elements between the first component and the end of the second component facing away from the first component.

8. Telescopic handle according to any of the preceding claims, **characterised in that** the expanding nut (122) and the tapered thread of the second component (124) are dimensioned and designed in such a way that the expanding nut in the closed position of the locking device exerts radial pressure against the inner circumference of the first handle element (112).

9. Telescopic handle according to any of the preceding claims, **characterised in that** the at least one elastic sleeve (140) is made of a thermoplastic elastomer and guided between slip rings (152).

10. Telescopic handle according to any of the preceding claims, further comprising a guide element (156) on the first handle element (112), which limits the relative displacement of the two handle elements (112, 114) in the longitudinal direction.

## Revendications

1. Tige de télescope (110), comprenant :
- un premier élément de tige (112),
- un deuxième élément de tige (114),
- les deux éléments de tige sont déplaçables l'un par rapport à l'autre, de manière progressive et continue en direction longitudinale, et
- sont susceptibles d'être fixés ensemble de manière désolidarisable au moyen d'un dispositif d'arrêt (120),
- le dispositif d'arrêt présente une position ouverte, dans laquelle les deux éléments de tige sont déplaçables l'un par rapport à l'autre, et
- présente une position fermée, dans laquelle les deux éléments de tige sont fixés ensemble, et
- dans la position fermée, le dispositif d'arrêt exerce une pression sur le premier élément de tige ;
où
- la pression est exercée par au moins une douille élastique ;
- le dispositif d'arrêt comprend un premier (122) et un deuxième composant (124), reliés l'un par rapport à l'autre, avec possibilité de rotation le long de la direction longitudinale des éléments de tige ;
- le premier composant est susceptible de tourner autour de l'axe longitudinal des éléments de tige par rapport au deuxième composant ;
- le passage de la position fermée à la position ouverte du dispositif d'arrêt et de la position ouverte à la position fermée du dispositif d'arrêt s'effectue par rotation du premier composant autour de l'axe longitudinal des éléments de tige par rapport au deuxième composant ; et
- la modification d'espacement en direction longitudinale des éléments de tige, entre le premier composant et l'extrémité, opposée au premier composant, du deuxième composant provoque un écrasement ou une détente de la au moins une douille élastique ;
**caractérisée en ce que**
le premier composant (122) est un écrou d'écartement avec un filetage conique et le deuxième composant (124) est une partie de fixation avec un filetage conique, où, sur l'extrémité, munie du filetage conique, du deuxième composant (124), est prévu un élément de butée (154), pour empêcher une séparation complète du premier composant (122) vis-vis du deuxième composant (124), au passage du dispositif d'arrêt (120) à la position ouverte.

2. Tige de télescope selon la revendication 1, **caractérisée en ce que**
la pression de la au moins une douille agit radialement sur le premier élément de tige.

3. Tige de télescope selon l'une des revendications précédentes, **caractérisée en ce que**
la au moins une douille élastique est montée sur le deuxième composant.

4. Tige de télescope selon l'une des revendications précédentes,
**caractérisé en ce que**
le deuxième composant est relié rigidement au deuxième élément de tige.

5. Tige de télescope selon l'une des revendications précédentes,
**caractérisé en ce que**
le premier composant (122) et le deuxième composant (124) sont composés d'un matériau unitaire, de préférence de matière synthétique.

6. Tige de télescope selon l'une des revendications précédentes,
**caractérisé en ce que**
les deux éléments de tige sont composés de matière synthétique ou de métal.

7. Tige de télescope selon l'une des revendications précédentes,
**caractérisé en ce que**
le dispositif d'arrêt est réalisé de manière qu'une rotation du premier et du deuxième composant autour de l'axe longitudinal des éléments de tige l'un par rapport à l'autre provoque une modification de l'espacement en direction longitudinale des éléments de tige, entre le premier composant et l'extrémité, opposée au premier composant, du deuxième composant.

8. Tige de télescope selon l'une des revendications précédentes,
**caractérisé en ce que**
l'écrou d'écartement (122) et le filetage conique du deuxième composant (124) sont dimensionnés et configurés de manière que l'écrou d'écartement, dans la position fermée du dispositif d'arrêt, exerce une pression radiale contre la périphérie intérieure du premier élément de tige (112).

9. Tige de télescope selon l'une des revendications précédentes,
**caractérisé en ce que**
la au moins une douille (140) élastique est composée d'un élastomère thermoplastique et est guidé entre des bagues de glissement (152).

10. Tige de télescope selon l'une des revendications précédentes,
comprenant en outre un élément de guidage (156) sur le premier élément de tige (112), qui limite le déplacement relatif des deux éléments de tige (112, 114) en direction longitudinale.
